# EUROPEAN PATENT SPECIFICATION

(11) **EP 2 712 075 B1**
(45) Date of publication and mention of the grant of the patent: **07.03.2018**
(21) Application number: 12185303.0
(22) Date of filing: 20.09.2012
(51) Int. Cl.: H02P 6/18, H02P 25/08

(54) **Method to control a switched reluctance machine**
Verfahren zur Steuerung einer geschalteten Reluktanzmaschine
Procédé pour commander une machine à réluctance commutée

(43) Date of publication of application: 26.03.2014
(73) Proprietor: Perkins Engines Company Limited, Peterborough Cambridgeshire PE1 5NA (GB)
(72) Inventor: Langley, Thomas, Peterborough, Cambridgeshire PE1 5AA (GB); Watkins, Stephen, LS8 2RU Leeds (GB)
(74) Representative: BRP Renaud & Partner mbB Rechtsanwälte Patentanwälte Steuerberater

(56) References cited:
- US-A- 5 949 211

## Description

### Technical Field

This disclosure relates to the field of sensorless monitoring and control of rotor position in a reluctance machine; in particular to switched reluctance machines and more particularly to high speed switched reluctance machines

### Background

The accurate timing of the excitation of phases with respect to rotor position, in a switched reluctance machine, may be an important factor to obtain optimal performance. Rotor position sensors may be widely used in switched reluctance machines for monitoring rotor position. Such monitoring may be conventionally performed by an optical or magnetic sensor mounted on the stator. Control of the rotor position in the reluctance machine may be based on data relating to the rotor position.

To avoid dependency upon sensors, sensorless monitoring and control methods have been developed. Sensorless monitoring methods of switched reluctance machines may include signal injection methods and direct phase measurement methods.

Signal injection methods may rely on diagnostic energization pulses, for example non-torque producing pulses, that allow the controller to monitor the diagnostic current and accordingly the variation in inductance, from which the rotor position can be computed. In general, signal injection methods may be useful at starting and low operating speeds, but may adversely impact the motor performance at higher operating speeds.

Direct phase measurement methods may rely on monitoring phase current and voltage in order to determine the rotor position. A direct phase measurement method may use the concept of phase current freewheeling. Phase current freewheeling may be produced in a switched reluctance machine by setting voltage across a phase winding to zero for a period of time. During the freewheeling period current may circulate around the winding and the flux may be constant.

EP0780966B1 describes a method of sensorless rotor position monitoring in reluctance machines. The method comprises determining the rate of change of current at a particular point at which current in the winding may be arranged to freewheel. The point may coincide with alignment of a rotor and a stator pole such that the rate of change of current is predicted to be zero. The magnitude and polarity of any variation from the predicted rate of change may indicate a rotor position not in alignment with the actual rotor position and whether it is in advance of, or retreated from, the predicted position.

US5949211 discloses a switched reluctance motor including an auxiliary winding interspersed among the main phase windings such that a constant inductance ratio is established between the main and auxiliary windings regardless of rotor position. The auxiliary winding preferably has a higher inductance compared to the main winding. A test current is injected into the auxiliary winding in order to indirectly determine rotor position and the auxiliary winding is utilized to maintain a holding torque under static load conditions.

The present disclosure is directed, at least in part, to improving or overcoming one or more aspects of the prior art system.

### Brief Summary of the Invention

In a first aspect, the present disclosure describes a method to control the rotor position in a reluctance machine comprising a stator, a rotor movable relative to the stator and at least one phase winding coupled to the stator, the method comprising the steps of: energising the phase winding to move the rotor relative to the stator; freewheeling current through the phase winding over a freewheeling period; sampling rate of change of phase current and amplitude of phase current; de-energising the phase winding; and computing the angular position of the rotor.

In a second aspect, the present disclosure describes a system to control the rotor position in a reluctance machine comprising a stator, a rotor movable relative to the stator and at least one phase winding coupled to the stator, the system comprising: switches to energise the phase winding to move the rotor relative to the stator; to configure a freewheeling current through the phase winding over a freewheeling period and to de-energise the phase winding; a firing controller configured to command the sampling of rate of change of phase current and amplitude of phase current; and a microprocessor to compute the angular position of the rotor.

### Brief Description of the Drawings

The foregoing and other features and advantages of the present disclosure will be more fully understood from the following description of various embodiments, when read together with the accompanying drawings, in which:
Fig. 1 is a schematic representation of an asymmetric half-bridge in phase energisation mode according to the present disclosure;
Fig. 2 is a schematic representation of an asymmetric half-bridge in freewheeling mode according to the present disclosure;
Fig. 3 is a schematic representation of an asymmetric half-bridge in de-energised mode according to the present disclosure;
Fig. 4 is a graph showing a phase current wave form according to the present invention;
Fig. 5 is a graph showing rate of change of current characteristics as a function of phase current according to the present invention; and
Fig. 6 is a schematic diagram illustrating a control circuit according to the present disclosure.

### Detailed Description

This disclosure generally relates to a method of monitoring and controlling rotor position in a reluctance machine.

The method may be implemented in a reluctance machine which comprises a stator, a rotor that is movable relative to the stator and at least one phase winding coupled to the stator to control the rotor position. The method may comprise the steps of energising the phase winding to move the rotor relative to the stator; freewheeling current through the phase winding over a freewheeling period; sampling rate of change of phase current and amplitude of phase current; de-energising the phase winding; and computing the angular error in the rotor position.

The method may be used in ultra-high speed switched reluctance machines. An ultra-high speed switched reluctance machine may have a rotational speed of equal to or greater than 100, 000 rpm.

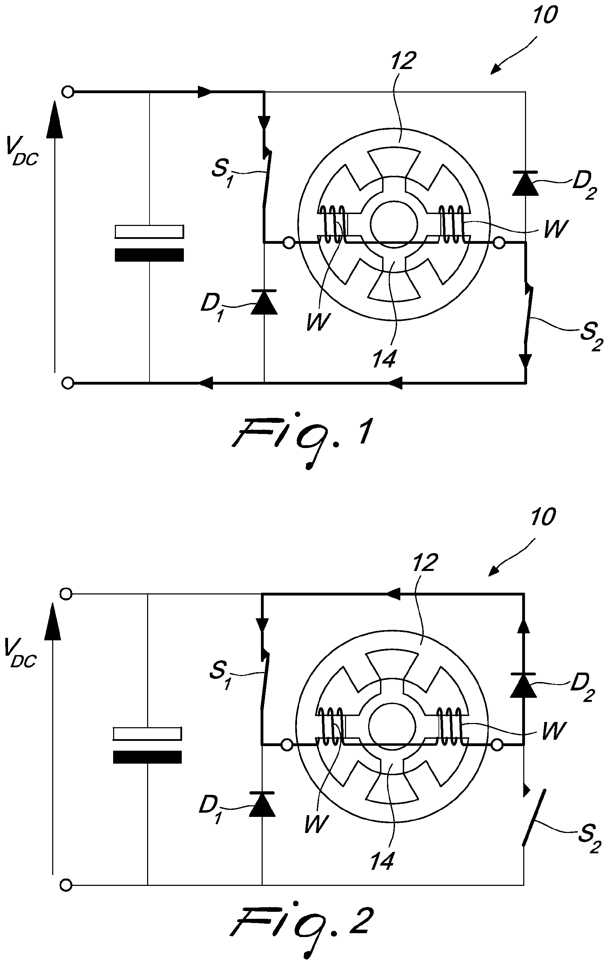

Figs 1 to 3 illustrate an asymmetric half bridge power converter circuit 10 in three modes of operation for a switched reluctance machine having a stator 12 and a rotor 14. A phase winding **W** may be connected between a switch **S1** associated with a diode **D1** and a switch **S2** associated with a diode **D2.**

With reference to Fig. 1, the phase winding may be energised from a DC source by closing switches **S1** and **S2** in the circuit **10** so that current may flow through the phase winding **W** to move the rotor **14** relative to the stator **12.** The phase winding **W** may be in an energised state when switches **S1** and **S2** are closed.

Freewheeling current in a switched reluctance machine is generally known. Freewheeling current through a phase winding may be effected by setting the voltage across the phase winding of a switched reluctance machine to zero. The voltage may be set to almost zero by providing a short-circuit path across the ends of the phase winding so as to circulate current around the phase winding.

According to the method of the present disclosure, current is freewheeled through the phase winding **W** over a freewheeling period which corresponds to a portion of angular movement of the rotor **14.** With reference to Fig. 2, the phase winding **W** may be in a freewheeling state when either one of switches **S1** and **S2** is open.

The freewheeling of phase current may be performed during any part of the phase inductance cycle. A phase inductance cycle may be the period of inductance variance in a switched reluctance machine.

In an embodiment, the freewheeling period may start prior to the step of sampling rate of change of phase current and amplitude of phase current. In an embodiment, the freewheeling period may terminate after the step of sampling rate of change of phase current and amplitude of phase current.
The freewheeling period may be long. The freewheeling period may be a value selected on the basis of on optimum efficiency performance at a given speed and torque operating point. The freewheel period may be selected from greater than 4° of angular movement of the rotor **14.** The freewheel period may be selected from the range of 5° to 20° of angular movement of the rotor **14.** In an embodiment, the freewheel period may be selected from the range of 8° to 15° of angular movement of the rotor **14.** In an embodiment, the freewheel period may be selected from the range of 10° to 12° of angular movement of the rotor **14.**

In ultrahigh speed applications, a long freewheeling period may reduce machine inefficiency and obtain maximum power from the reluctance machine. A long freewheeling period may provide a low machine loss by minimising the iron losses.

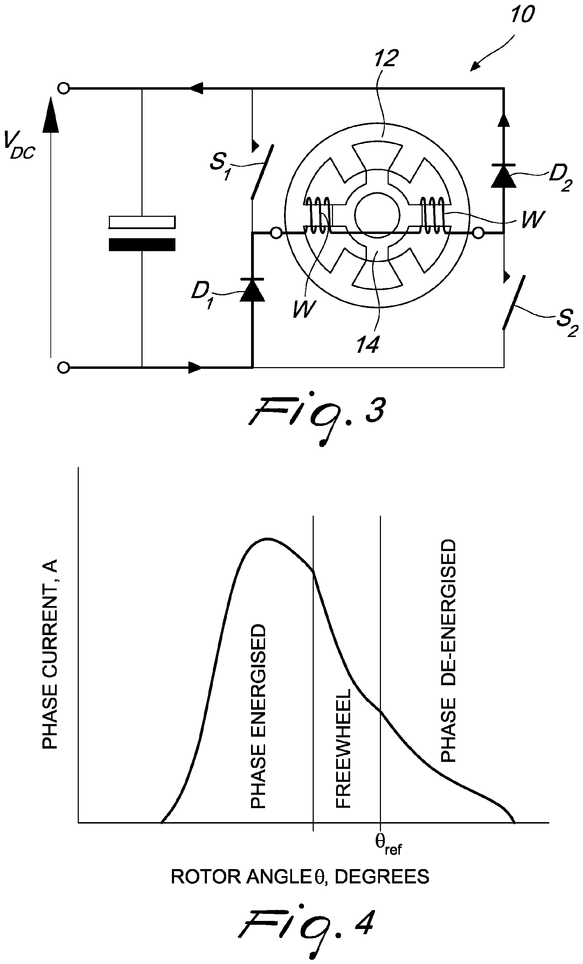

With reference to Fig. 3, the phase winding **W** may be de-energised by opening both switches **S1** and **S2** in the circuit **10** so that no current may flow through the phase winding **W.** The phase winding **W** may be in a de-energised state when switches **S1** and **S2** are open. In the de-energised state mode, current will flow through phase winding **W** via **D1** & **D2** until the flux in the machine drops to zero.

Fig. 4 illustrates the phase current waveforms with respect to the angular position of the rotor **14.** In an embodiment, the θ ref is the reference angle at the transition between the freewheeling stage of the phase winding **W** and the de-energised state of phase winding **W.**

According to the method, for a given speed the angle of the rotor **14** at which the both switches **S1** and **S2** are turned-off and the angle of the rotor **14** at which one switch **SI, S2** is turned-off may be characterised. The shaft power may be increased by advancing the angle at which both switches **S1** and **S2** are turned-on, and increasing the time over the flux in the motor builds-up. At a given speed, the energisation of the phase winding **W** may be adjusted until the rate of change of phase current and amplitude of phase current may match the required turn-off angle (angle of the rotor **14** at which either both switches **S1** and **S2** are turned-off or at which one switch **SI, S2** is turned-off) point for that speed.

The characterisation may be performed for a switched reluctance machine to establish reference angular positions of the rotor **14** based on the turn-off points prior to commencement of operation. The reference rotor angular positions may be used to compare the angular positions of the sampled rate of change of phase current and amplitude of phase current. The reference rotor angular positions may enable optimal control of the switched reluctance machine.

The rate of change of phase current and amplitude of phase current may be sampled at an instantaneous interval. The sampling interval may be of the order of a microsecond. The sampling interval may be determined by an analogue to digital converter used in a control circuit. The analogue to digital converter may be a peripheral in a microcontroller such as a TI Picollo 32-bit micro. Sampling rate of change of phase current and amplitude of phase current may be performed at the transition from the freewheeling state to the de-energisation state of the phase winding **W.** Sampling rate of change of phase current and amplitude of phase current may be performed at a sampling point when both switches **S1** and **S2** are opened.

In an embodiment, sampling rate of change of phase current and amplitude of phase current may be performed at or near the end of the freewheeling period. Sampling may be performed immediately prior to the start of de-energisation of the phase winding **W.** Sampling may be triggered by a gate signal transition. Noise in the samples may be reduced through a propagation delay in the gate drive circuitry. Sampling rate of change of phase current and amplitude of phase current may be performed at a sampling point before both switches **S1** and **S2** are opened.

In an embodiment, sampling rate of change of phase current and amplitude of phase current may be carried out at or near the start of the de-energisation of the phase winding **W.** Sampling may be performed immediately after the start of de-energisation of the phase winding **W.** Sampling rate of change of phase current and amplitude of phase current may be performed at a sampling point after both switches **S1** and **S2** are opened.

The rate of change of phase current and amplitude of phase current may be sampled in order to compute the angular position of the rotor **14.** The sampled rate of change of phase current and amplitude of phase current may be compared with reference rates of change of phase current and amplitudes of phase current in order to determine whether there is an angular error in the rotor position.

The sampling point may be selected based on a rotor position that corresponds to a transition between energy states, i.e. transition between energised and freewheeling state and transition between freewheeling and de-energised states.

The sampling point may be selected on the basis of optimal operation of the switched reluctance machine.

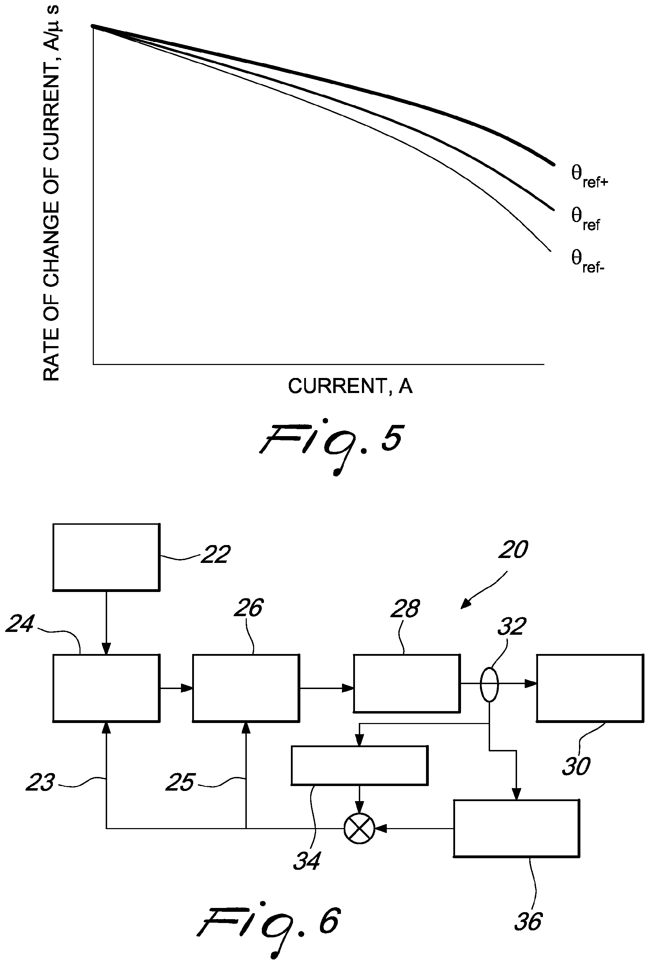

Figure 5 shows the rate of change of current as a function of the phase current. Three curves θ ref, θ ref ⁺, θ ref ⁻ may indicate angular position of the rotor **14** with respect to predetermined reference rates of change of phase current and amplitudes of phase current. The curves θ ref, θ ref ⁺, θ ref ⁻ merely provide an indication of a graph that may have plotted therein all the possible angular positions of the rotor **14.** The freewheel current slope may decrease as the angular position of the rotor **14** approaches the fully aligned position when the rotor **14** is fully aligned to the stator **12.**

Curve θ ref may indicate a specific angular position. Curve θ ref may indicate a reference angle at the transition between the freewheeling stage of the phase winding **W** and the de-energised state of phase winding **W.**

Curve θ ref ⁺ may indicate an angular position greater than the angular position of curve θ ref. In an embodiment, curve θ ref ⁺ may indicate an angular position 2° greater than the angular position of curve θ ref.

Curve θ ref ⁻ may indicate an angular position lesser than the angular position of curve θ ref. In an embodiment, curve θ ref ⁻ may indicate an angular position 2° lesser than the angular position of curve θ ref.

The angular position of rotor **14** may be obtained by determining the curve that coincides with the sampled rate of change of phase current and amplitude of phase current. An angular error may be present if the curve that coincides with the sampled rate of change of phase current and amplitude of phase current indicates an angular position different to that characterised for the sampling period. The angular error may be used to modify a timer to estimate the position of the rotor **14.**

Fig. 6 is a schematic diagram of a control circuit **20** for implementing a method of monitoring rotor position in a reluctance machine. The control circuit **20** may be incorporated in a reluctance machine which comprises a stator, a rotor that is movable relative to the stator and at least one phase winding coupled to the stator to control the rotor position. The control circuit **20** may control switches **SI, S2** that are actuatable for energisation of the phase winding **W** to move the rotor **14** relative to the stator **14,** to freewheel current through the phase winding **W** over a freewheeling period and to de-energise the phase winding **W.**

The control circuit **20** may have speed controller **24.** The speed controller **24** may receive a speed demand signal **22.** The speed demand signal **22** may be compared to a feedback signal that is obtained from line **23.** The output of the speed controller **24** may be speed error signal that is sent as an input to the firing controller **26.** The firing controller **26** may not introduce a monitoring period. The firing controller **26** may command the sampling of rate of change of phase current and amplitude of phase current. The firing controller **26** may command the sampling of rate of change of phase current and amplitude of phase current at the transition from the freewheeling state to the de-energised state of the phase winding **W.**

In an embodiment, the firing controller **26** may command the sampling of rate of change of phase current and amplitude of phase current at or near the end of the freewheeling period.

In an embodiment, the firing controller **26** may command the sampling of rate of change of phase current and amplitude of phase current may be carried out at or near the start of the de-energisation of the phase winding W.

The output signal of the firing controller **26** may be used to control actuation of the power converter **28.**

Phase current sensing may be performed by current sensor **32.** The output signal of the current sensor **32** may indicate the amplitude of the phase current. The amplitude of the phase current may be used to compute the rate of change of phase current at the sampling point. The rate of change of phase current may be computed and sent out as an output signal **36** and amplitude of phase current may be computed and sent out as an output signal **34.** The output signals **34, 36** may form the basis for the indication of the position of the rotor **14** relative to the stator **12.** The output signals **34, 36** may be compared to the respective reference rate of change of phase current and amplitude of phase current.

The firing controller **26** may command the current sensor **32** to perform sampling as the sampling period is dependent upon the timing of the switches **S1** and **S2.** The current sensor **32** conducts sampling at a time determined by the firing controller **26.**

Current sensor 32 may be a physical current sensor, such as a Hall effect device or resistor having a differential op-amp. An additional differentiator may be required for determining rate of change of phase current. The additional differentiator may be an op-amp circuit. The rate of change of phase current may be determined by initially double sampling in a micro and then computing rate of change of phase current.

Sampling of rate of change of phase current and amplitude of phase current may be performed at the phase winding **W,** or near the switches **S1** and **S2.** Sampling of rate of change of phase current and amplitude of phase current may be performed along the circuit comprising the phase winding **W** and the switches **S1** and **S2.**

If the error between the rate of change of phase current and the reference for the given current amplitude is zero, then the error in rotor position, θ_{ref} may be zero. If there is an error in rotor position then the positional error may be applied to the speed controller **24** and firing controller **26** that is responsive to the magnitude and polarity of the position error.

In an embodiment, the error signal feedback sent to the speed controller **24** through line **23** may be processed as a positional error signal. The positional error signal may be used to re-calculate speed from the speed predicted by firing controller 26. The error between the re-calculated speed based on positional error feedback and the speed demand may be sent to firing controller **26** by the speed controller **24.** The firing controller **26** may determine the control actions required to reduce the error between sampled and demanded speed.

In an embodiment, the error signal feedback sent to the speed controller **24** through line **23** and a positional error feedback may be sent to the firing controller **26** through line **25.**

The speed controller **24** may adjust the estimated speed based on the rotor position error. If the rotor position error indicates the rotor may be in advance of the expected position, the rotor **14** may be rotating faster than previously estimated. If the rotor position error indicates the rotor is retarded of the expected position, the rotor **14** may be rotating slower than previously estimated.

The firing controller **26** may include a free-running timer which is used to set the angular position of switching firing events. By deriving rotor position error from the current rate of change and the amplitude of phase current the timer may be reset for each phase. Then, for a given speed, the firing controller **26** may use the corrected assessment of the rotor position in one phase and a predetermined data of the firing control strategy in order to determine θ_{ref},_{,} the point of transition from freewheeling state to the de-energisation state of the next machine cycle.

For a given speed, the firing controller **26** may determine the time at which freewheeling should end (θ_{ref}) according to the firing control strategy. At that time the firing controller **26** may actuate the measurement of current magnitude and rate of change.

When computing rate of change of phase current and determining amplitude of phase current the signals corresponding to rate of change of phase current signal **36** and determining amplitude of phase current signal **34** may be processed by a processor. The processor may be programmed with an equation or a look-up table to determine the rotor angular position. The equation or a look-up table may correspond to the graph of Fig. 5. The processor may determine the angular position which is then compared to the characterised current amplitude and rate of change data.

Re-energisation may occur upon completion of a rotation by the rotor **14,** or in a machine with more than one phase, once the rotor is within sufficient proximity to the stator that the electromagnetic effect of the stator can influence the rotor.

A system to control the rotor position in a reluctance machine comprising a stator, a rotor movable relative to the stator and at least one phase winding coupled to the stator, the system comprising switches **SI, S2** to energise the phase winding to move the rotor relative to the stator; to configure a freewheeling current through the phase winding over a freewheeling period and to de-energise the phase winding; a firing controller **26** configured to command sampling of rate of change of phase current and amplitude of phase current; and a microprocessor to compute the angular position of the rotor.

The firing controller **26** may be configured to receive a speed error signal from a speed controller **24.** The system may comprise a timer to estimate the position the rotor **14.**

The skilled person would appreciate that foregoing embodiments may be modified or combined to obtain the method of the present disclosure.

### Industrial Applicability

This disclosure describes a method of monitoring a rotor position in a reluctance machine. The method of monitoring a rotor position may be employed in high speed switched reluctance machines for example reluctance motors having more than 100,000 rpm. The method involves a freewheel period that is long and obtaining an instantaneous sample of the amplitude and rate of change of phase current. The method involves computation of the rotor position that is based on the amplitude and the rate of change of phase current amplitude at the sampling point.

The method employs a high freewheeling duration to minimise iron losses at high operating speeds. The freewheeling phase current amplitude and rate of change of current are observed at an instantaneous interval of switching the phase from the freewheeling mode to the fully de-energized mode. Then the predetermined characteristics of the reluctance machine may be referenced to compute the angular position of the rotor.

The method overcomes the need for an electro-mechanical rotor position sensor, which may introduce additional moving components causing significant challenges in highspeed, compact or harsh environment applications. Sensorless control may be implemented via control software and a simple and robust electronic current sensor in the power electronic circuitry so as to exclude moving parts.

The method may improve accuracy of rotor position computation as phase current amplitude and rate of change current as used along with a pre-determined model of the nonlinear electro-magnetic characteristics of the reluctance machine. Through the use of phase current freewheeling flux linkage may not be required. An advantage is that the continuous computation of flux linkage, which is equal to the integral of the DC link voltage over time, may not be required to compute the angular position of the rotor. The method has the advantage of reduced complexity of DC link voltage measurement and reduced computational demands. The measurement of rotor position by use of rate of change and amplitude of phase current may avoid the need for the use of DC link voltage measurement.

The method may be implemented in machines having switched reluctance motors. The method may be implemented in industrial machines or off-highway vehicles powered by an industrial, heavy-duty diesel engine, equipped with the Electric Turbo Assist system, or vacuum cleaners.

The freewheeling period may be selected on the basis of on optimum efficiency performance at a given speed and torque operating point. The freewheeling period may be selected without specific reference to the position of the rotor **14.**

## Claims

1. A method to control the rotor position in a reluctance machine comprising a stator (12), a rotor (14) movable relative to the stator (12) and at least one phase winding (W) coupled to the stator (12), the method comprising the steps of:
energising the phase winding (W) to move the rotor (14) relative to the stator (12);
freewheeling current through the phase winding (W) over a freewheeling period;
sampling rate of change of phase current and amplitude of phase current;
de-energising the phase winding (W); and
computing the angular position of the rotor (14).

2. The method of claim 1 wherein the period is selected from greater than 4° of angular movement of the rotor (14).

3. The method of claim 2 wherein the period is selected from the range of 5° to 20° of angular movement of the rotor (14).

4. The method of claim 3 wherein the period is selected from the range of 8° to 15° of angular movement of the rotor (14).

5. The method of any one of preceding claims wherein the step of computing angular position of the rotor (14) includes determining the angular error in the rotor position by comparing sampled rate of change of phase current and amplitude of phase current with reference rate of change of phase current and amplitude of phase current.

6. The method of any one of preceding claims further comprising the step of modifying a timer to estimate the position the rotor (14).

7. The method of any one of preceding claims wherein the freewheeling period starts prior to the step of sampling rate of change of phase current and amplitude of phase current.

8. The method of any one of preceding claims the freewheeling period terminates after the step of sampling rate of change of phase current and amplitude of phase current

9. The method of any one of preceding claims including sampling rate of change of phase current and amplitude of phase current at or near the end of the freewheeling period.

10. The method of any one of preceding claims 1 to 7 including sampling rate of change of phase current and amplitude of phase current at the transition from the freewheeling state of the phase winding to the de-energised state of the phase winding.

11. The method of any one of preceding claims 1 to 7 including sampling rate of change of phase current and amplitude of phase current at or near the start of the de-energisation of the phase winding.

12. The method of any one of preceding claims wherein sampling point is selected based on a rotor position corresponding to a transition between energisation states.

13. A system to control the rotor position in a reluctance machine comprising a stator (12), a rotor (14) movable relative to the stator (12) and at least one phase winding (W) coupled to the stator (12), the system comprising:
switches (S1, S2) to energise the phase winding (W) to move the rotor relative to the stator (12); to configure a freewheeling current through the phase winding (W) over a freewheeling period and to de-energise the phase winding (W);
a firing controller (26) configured to command the sampling of rate of change of phase current and amplitude of phase current; and
a microprocessor to compute the angular position of the rotor (14).

14. The system of claim 13 wherein the firing controller (26) is configured to receive a speed error signal from a speed controller (24).

15. The system of claim 13 or 14 further comprising a timer to estimate the position the rotor (14).

## Patentansprüche

1. Verfahren zum Steuern der Rotorposition in einer Reluktanzmaschine, die einen Stator (12), einen relativ zum Stator (12) beweglichen Rotor (14) und mindestens eine Phasenwicklung (W) umfasst, die mit dem Stator (12) gekoppelt ist, wobei das Verfahren die Schritte umfasst des:
Erregens der Phasenwicklung (W), um den Rotor (14) relativ zum Stator (12) zu bewegen;
Freilaufens von Strom durch die Phasenwicklung (W) über eine Freilaufperiode;
Abtastens von Phasenstrom-Änderungsrate und Phasenstrom-Amplitude;
Entregens der Phasenwicklung (W); und
Berechnens der Winkelposition des Rotors (14).

2. Verfahren nach Anspruch 1, wobei die Periode aus größer als 4° Winkelbewegung des Rotors (14) ausgewählt ist.

3. Verfahren nach Anspruch 2, wobei die Periode aus dem Bereich von 5° bis 20° Winkelbewegung des Rotors (14) ausgewählt ist.

4. Verfahren nach Anspruch 3, wobei die Periode aus dem Bereich von 8° bis 15° Winkelbewegung des Rotors (14) ausgewählt ist.

5. Verfahren nach einem der vorstehenden Ansprüche, wobei der Schritt des Berechnens der Winkelposition des Rotors (14) das Bestimmen des Winkelfehlers in der Rotorposition durch Vergleichen von abgetasteter Phasenstrom-Änderungsrate und Phasenstrom-Amplitude mit Referenz-Phasenstrom-Änderungsrate und -Phasenstrom-Amplitude einschließt.

6. Verfahren nach einem der vorstehenden Ansprüche, weiter den Schritt des Modifizierens eines Timers umfassend, um die Position des Rotors (14) zu schätzen.

7. Verfahren nach einem der vorstehenden Ansprüche, wobei die Freilaufperiode vor dem Schritt des Abtastens von Phasenstrom-Änderungsrate und Phasenstrom-Amplitude beginnt.

8. Verfahren nach einem der vorstehenden Ansprüche, die Freilaufperiode nach dem Schritt des Abtastens von Phasenstrom-Änderungsrate und Phasenstrom-Amplitude endet

9. Verfahren nach einem der vorstehenden Ansprüche, einschließlich Abtasten von Phasenstrom-Änderungsrate und Phasenstrom-Amplitude am oder nahe dem Ende der Freilaufperiode.

10. Verfahren nach einem der vorstehenden Ansprüche 1 bis 7, einschließlich Abtasten von Phasenstrom-Änderungsrate und Phasenstrom-Amplitude am Übergang vom Freilaufzustand der Phasenwicklung zum entregten Zustand der Phasenwicklung.

11. Verfahren nach einem der vorstehenden Ansprüche 1 bis 7, einschließlich Abtasten von Phasenstrom-Änderungsrate und Phasenstrom-Amplitude am oder nahe dem Beginn des Entregens der Phasenwicklung.

12. Verfahren nach einem der vorstehenden Ansprüche, wobei der Abtastpunkt basierend auf einer Rotorposition ausgewählt wird, die einem Übergang zwischen Erregungszuständen entspricht.

13. System zum Steuern der Rotorposition in einer Reluktanzmaschine, die einen Stator (12), einen relativ zum Stator (12) beweglichen Rotor (14) und mindestens eine Phasenwicklung (W) umfasst, die mit dem Stator (12) gekoppelt ist, wobei das System umfasst:
Schalter (S1, S2), um die Phasenwicklung (W) zu erregen, um den Rotor relativ zum Stator (12) zu bewegen; um einen Freilaufstrom durch die Phasenwicklung (W) über eine Freilaufperiode zu konfigurieren, und um die Phasenwicklung (W) zu entregen;
eine Aktivierungssteuerung (26), die dazu konfiguriert ist, das Abtasten von Phasenstrom-Änderungsrate und Phasenstrom-Amplitude anzusteuern; und
einen Mikroprozessor, um die Winkelpositon des Rotors (14) zu berechnen.

14. System nach Anspruch 13, wobei die Aktivierungssteuerung (26) dazu konfiguriert ist, ein Drehzahlfehlersignal von einer Drehzahlsteuerung (24) zu empfangen.

15. System nach Anspruch 13 oder 14, weiter einen Timer umfassend, um die Position des Rotors (14) zu schätzen.

## Revendications

1. Procédé pour commander la position du rotor dans une machine à réluctance comprenant un stator (12), un rotor (14) mobile par rapport au stator (12) et au moins un enroulement de phase (W) couplé au stator (12), le procédé comprenant les étapes de :
alimentation de l'enroulement de phase (W) pour déplacer le rotor (14) par rapport au stator (12) ;
circulation de courant de roue libre à travers l'enroulement de phase (W) pendant une période de roue libre ;
échantillonnage du taux de variation de courant de phase et de l'amplitude de courant de phase ;
coupure de l'alimentation de l'enroulement de phase (W) ; et
calcul de la position angulaire du rotor (14).

2. Procédé selon la revendication 1 dans lequel la période est choisie supérieure à 4° de mouvement angulaire du rotor (14).

3. Procédé selon la revendication 2 dans lequel la période est choisie dans la plage de 5° à 20° de mouvement angulaire du rotor (14).

4. Procédé selon la revendication 3 dans lequel la période est choisie dans la plage de 8° à 15° de mouvement angulaire du rotor (14).

5. Procédé selon l'une quelconque des revendications précédentes dans lequel l'étape de calcul de la position angulaire du rotor (14) inclut la détermination de l'erreur angulaire de la position du rotor par comparaison du taux de variation de courant de phase et de l'amplitude de courant de phase échantillonnés en référence au taux de variation de courant de phase et à l'amplitude de courant de phase.

6. Procédé selon l'une quelconque des revendications précédentes comprenant en outre l'étape de modification d'un chronométreur pour estimer la position du rotor (14).

7. Procédé selon l'une quelconque des revendications précédentes dans lequel la période de roue libre commence avant l'étape d'échantillonnage du taux de variation de courant de phase et de l'amplitude de courant de phase.

8. Procédé selon l'une quelconque des revendications précédentes la période de roue libre se termine après l'étape d'échantillonnage du taux de variation de courant de phase et de l'amplitude de courant de phase.

9. Procédé selon l'une quelconque des revendications précédentes incluant l'échantillonnage du taux de variation de courant de phase et de l'amplitude de courant de phase la période à la fin ou vers la fin de la période de roue libre.

10. Procédé selon l'une quelconque des revendications précédentes 1 à 7 incluant l'échantillonnage du taux de variation de courant de phase et de l'amplitude de courant de phase au moment de la transition de l'état de roue libre de l'enroulement de phase à l'état de coupure de l'alimentation de l'enroulement de phase.

11. Procédé selon l'une quelconque des revendications précédentes 1 à 7 incluant l'échantillonnage du taux de variation de courant de phase et de l'amplitude de courant de phase au début ou vers le début de la coupure de l'alimentation de l'enroulement de phase.

12. Procédé selon l'une quelconque des revendications précédentes dans lequel le point d'échantillonnage est choisi sur la base d'une position du rotor correspondant à une transition entre des états d'alimentation.

13. Système de commande de la position du rotor dans une machine à réluctance comprenant un stator (12), un rotor (14) mobile par rapport au stator (12) et au moins un enroulement de phase (W) couplé au stator (12), le système comprenant :
des commutateurs (S1, S2) pour alimenter l'enroulement de phase (W) pour déplacer le rotor par rapport au stator (12) ; pour configurer une circulation de courant de roue libre à travers l'enroulement de phase (W) pendant une période de roue libre et pour couper l'alimentation de l'enroulement de phase (W) ;
un dispositif de commande d'allumage (26) configuré pour commander l'échantillonnage du taux de variation de courant de phase et de l'amplitude de courant de phase ; et
un microprocesseur pour calculer la position angulaire du rotor (14).

14. Système selon la revendication 13 dans lequel le dispositif de commande d'allumage (26) est configuré pour recevoir un signal d'erreur de vitesse en provenance d'un dispositif de commande de vitesse (24).

15. Système selon la revendication 13 ou 14 comprenant en outre un chronométreur pour estimer la position du rotor (14).
